# EUROPÄISCHE PATENTSCHRIFT

(11) **EP 1 912 840 B1**
(45) Veröffentlichungstag und Bekanntmachung des Hinweises auf die Patenterteilung: **22.10.2014**
(21) Anmeldenummer: 06763514.4
(22) Anmeldetag: 06.06.2006
(51) Int. Cl.: B60T 13/74, F16D 65/18

(54) **ELEKTROMECHANISCHE BREMSE**
ELECTROMECHANICAL BRAKE
FREIN ELECTROMECANIQUE

(30) Priorität: 29.07.2005 DE 102005035607
(43) Veröffentlichungstag der Anmeldung: 23.04.2008
(73) Patentinhaber: ROBERT BOSCH GMBH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71063 Sindelfingen (DE); FRICK, Hans, 87487 Wiggensbach (DE)
(86) Internationale Anmeldenummer: PCT/EP2006/062910
(87) Internationale Veröffentlichungsnummer: WO 2007/012515

(56) Entgegenhaltungen:
- DE-A1- 10 255 192
- DE-A1- 19 652 229
- DE-A1- 19 945 543

## Beschreibung

### Stand der Technik

Die Erfindung betrifft eine elektromechanische Bremse mit den Merkmalen des des Anspruchs 1.

Derartige Bremsen sind an sich bekannt. Zu ihrer Betätigung, d. h. zum Drücken eines Reibbremsbelags gegen einen drehbaren, zu bremsenden Bremskörper, weisen die Bremsen eine elektromechanische Betätigungseinrichtung mit einem Elektromotor und einem Rotations-/Translations-Umsetzungsgetriebe auf, über das mit dem Elektromotor der Reibbremsbelag gegen den Bremskörper drückbar ist. Dem Elektromotor und dem Rotations-/Translations-Umsetzungsgetriebe ist vielfach ein Untersetzungsgetriebe zwischengeschaltet). Als Rotations-/Translations-Umsetzungsgetriebe sind Schraubgetriebe gebräuchlich, es kommen allerdings auch andere Getriebe, beispielsweise Zahnstangengetriebe oder ein mit dem Elektromotor über ein Untersetzungsgetriebe schwenkbarer Nocken, der den Reibbremsbelag gegen den Bremskörper drückt, zur Umsetzung der rotierenden Antriebsbewegung des Elektromotors in eine translatorische Bewegung zum Drücken des Reibbremsbelags gegen den Bremskörper in Betracht. Auch ein Elektromagnet an Stelle des Elektromotors ist denkbar. Der Bremskörper ist im Falle einer Scheibenbremse eine Bremsscheibe, im Falle einer Trommelbremse eine Bremstrommel.

Ein Beispiel einer derartigen elektromechanischen Bremse offenbart die DE 102 55 192 A1. Zur Weiterbildung als Feststellbremse (Parkbremse) weist die bekannte Bremse einen schaltbaren Freilauf auf, der in einer eingeschalteten Stellung eine Motorwelle des Elektromotors gegen ein Drehen in einer Löserichtung der Bremse sperrt. Die Sperrung kann unmittelbar an der Motorwelle oder mittelbar beispielsweise an einer Getriebewelle erfolgen. In einer Betätigungs- oder Zuspannrichtung der Bremse ist die Motorwelle auch bei eingeschaltetem Freilauf drehbar, so dass sich die Bremse betätigen, nicht jedoch lösen lässt. Bei ausgeschaltetem Freilauf ist die Motorwelle in beiden Drehrichtungen drehbar, die Bremse ist als Betriebsbremse betätigbar und lösbar. Bei der bekannten Bremse ist der Freilauf koaxial an ein Gehäuse angeflanscht, in dem der Elektromotor und das Rotations-/Translations-Umsetzungsgetriebe untergebracht sind.

Aus der DE 196 52 229 A1 ist eine elektromechanische Bremse bekannt, bei der ein Bremsbelag nicht von einem Elektromotor sondern von einem Spindeltrieb gegen eine Bremsscheibe drückbar ist. Im geschlossenen Zustand der Bremse ist eine Mutter des Spindeltriebs über eine zweite Spindel axial abgestützt und mittels einer Permanentmagnet-Bremse gegen Verdrehen blockiert. Zum Lösen der Bremse wird die Permanentmagnet-Bremse bestromt. Eine Reaktionskraft der Andruckkraft des Bremsbelags gegen die Bremsscheibe bewirkt in diesem Fall, dass sich die Spindel des Spindeltriebs in axialer Richtung von der Bremsscheibe entfernt bis die Bremsbeläge wieder frei sind oder nur noch mit geringer Andruckkraft anliegen. Selbst bei einem Ausfall des Spindeltriebs lässt sich die Bremse durch Bestromen der Permanentmagnet-Bremse lösen.

### Erläuterung und Vorteile der Erfindung

Die erfindungsgemäße Bremse umfasst einen Elektromotor mit einem Gehäuse, in dem eine, einen Rotor tragende Motorwelle drehbar gelagert ist und an dessen einem Stirnende ein Deckel angebracht ist. Weiterhin ist ein Rotations-/Translations-Umsetzungsgetriebe, ein Reibbremsbelag, der zur Betätigung der Bremse mit dem Elektromotor über das Rotations-/Translations-Umsetzungsgetriebe gegen einen Bremskörper drückbar ist, und ein schaltbarer Freilauf, mit Klemm- oder Sperrelementen, die in einem ringförmigen Zwischenraum zwischen der Motorwelle und dem Deckel um die Motorwelle herum verteilt angeordnet sind. Die verteilte Anordnung ist dabei derart, dass der Freilauf in einer eingeschalteten Stellung ein Drehen der Motorwelle des Elektromotors in Zuspannrichtung der Bremse gestattet und gegen ein Drehen in Löserichtung der Bremse sperrt. Dabei bildet der Deckel ein Lagerschild für die Motorwelle des Elektromotors und der Freilauf ist am oder im Deckel untergebracht.

Durch diese integrierte Bauweise des Deckels des Gehäuses für den Elektromotor reduziert sich die Anzahl der Einzelbauteile und zugleich der Montageaufwand der erfindungsgemäßen Bremse. Eine Lagegenauigkeit des Freilaufs in Bezug auf die Motorwelle ist erhöht, da das Lager für die Motorwelle im Deckel angeordnet ist, an bzw. in dem auch der Freilauf untergebracht ist. Eine hohe Genauigkeit der axialen Lage der Motorwelle in Bezug auf den Freilauf lässt sich einhalten. Die hohe Axialgenauigkeit ist wichtig, um ein zuverlässiges Schalten des Freilaufs sicher zu stellen und ein unbeabsichtigtes Schalten des Freilaufs zu vermeiden. Des Weiteren stellt die Erfindung eine exakte Einhaltung eines Einbauwinkels des Freilaufs sicher. Die Erfindung ermöglicht einen kompakten Aufbau der Bremse.

Die erfindungsgemäße Bremse kann eine Selbstverstärkungseinrichtung aufweisen, die eine beim Bremsen vom drehenden Bremskörper auf den gegen ihn gedrückten Reibbremsbelag ausgeübte Reibungskraft in eine Andruckkraft wandelt, die den Reibbremsbelag zusätzlich zu einer von der Betätigungseinrichtung aufgebrachten Andruckkraft gegen den Bremskörper drückt und dadurch die Bremskraft erhöht. Als mechanische Selbstverstärkungseinrichtungen kommen beispielsweise Keil- oder Rampenmechanismen oder Hebelmechanismen in Betracht. Auch andere, beispielsweise hydraulische Selbstverstärkungseinrichtungen sind denkbar.

Als Bauform für die erfindungsgemäße elektromechanische Bremse kommen Scheiben-, Trommel- oder eine sonstige Bremsenbauform in Betracht.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand eines in der Zeichnung dargestellten Ausführungsbeispiels näher erläutert. Es zeigen:

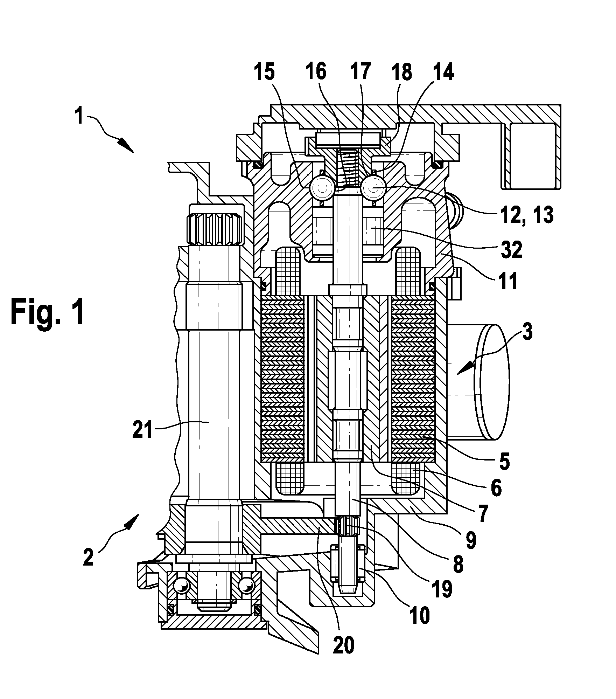

- Figur 1: eine Schnittdarstellung einer elektromechanischen Bremse gemäß der Erfindung; und
- Figur 2: einen Querschnitt eines Deckels eines Gehäuses der Bremse aus Figur 1.

### Beschreibung des Ausführungsbeispiels

Die in der Zeichnung dargestellte, insgesamt mit 1 bezeichnete erfindungsgemäße Bremse ist eine Scheibenbremse. Sie weist eine elektromechanische Betätigungseinrichtung 2 mit einem Elektromotor 3, einem noch zu erläuternden mehrstufigen Zahnrad- und Untersetzungsgetriebe und einem Zahnstangengetriebe oder einem sonstigen Rotations-/Tranlsations-Umsetzungsgetriebe auf. Der Elektromotor 3, das Untersetzungsgetriebe und das Rotations-/Translations-Umsetzungsgetriebe bilden eine elektromechanische Betätigungseinrichtung der Bremse 1. Der Elektromotor 3 weist einen Stator 5 mit Statorwicklungen 6 sowie einen Rotor 7 auf einer Motorwelle 8 auf. Der Elektromotor 3 ist ein elektronisch kommutierter Gleichstrommotor (bürstenloser BLDC-Motor), was allerdings nicht zwingend für die Erfindung ist. Der Elektromotor 3 ist in einem Gehäuse 9 untergebracht, in das der Stator 5 eingepresst oder in anderer Weise fixiert ist. Die Motorwelle 8 ist an einem Ende mit einem Loslager 10, d. h. mit Axialspiel im Gehäuse 9 drehbar gelagert. Im dargestellten und beschriebenen Ausführungsbeispiel wird ein Rollenlager als Loslager 10 verwendet.

Auf der anderen Stirnseite ist das Gehäuse 9 mit einem Deckel 11 verschlossen, der beispielsweise aus Stahl oder einem Werkstoff vergleichbarer Festigkeit hergestellt ist. Der Deckel 11 bildet ein Lagerschild eines Festlagers 12 des Elektromotors 3. Als Festlager 12 ist im dargestellten und beschriebenen Ausführungsbeispiel der Erfindung ein Kugellager mit Kugeln 13 gewählt, die in einem Kugelkäfig 14 drehbar gehalten sind. Eine in ein durchgehendes Axialloch im Deckel 11 geschliffene, umlaufende Nut mit kreisförmigem Querschnitt bildet einen äußeren Lagerring 15 des Festlagers 12. Ein innerer Lagerring des Festlagers 12 ist in einer Radialebene zur Motorwelle 8 zweigeteilt: Eine Hälfte des inneren Lagerrings wird von einer an einer Ringstufe der Motorwelle 8 geschliffenen Lauffläche 16 mit kreisförmigem Querschnitt gebildet. Eine zweite Lauffläche 17 mit ebenfalls kreisförmigem Querschnitt ist an einer Mutter 18 ausgebildet, die auf die Motorwelle 8 aufgeschraubt ist. Die Lauffläche 16 der Motorwelle 8 und die Lauffläche 17 der Mutter 18 ergänzen sich zu einer umlaufenden Nut mit kreisförmigem Querschnitt und zum inneren Lagerring 16, 17 des Festlagers 12. Durch Drehen der Mutter 18 auf der Motorwelle 8 kann ein Lagerspiel eingestellt werden, die Mutter 18 ist beispielsweise mit einem Schraubensicherungslack gegen Verdrehen auf der Motorwelle 8 gesichert.

An Stelle der beschriebenen Lagerkonstruktion des Festlagers 12 kommen auch andere Drehlagerungen der Motorwelle 8 in dem das Lagerschild bildenden Deckel 11 in Betracht. Es kann beispielsweise ein Wälzlager auf die Motorwelle 8 aufgepresst und in eine Ringstufe im Axialloch im Deckel 11 eingesetzt und dort mit einem Sicherungsring gesichert sein (nicht dargestellt).

Ein mit der Motorwelle 8 ein drehfestes, beispielsweise durch Schleifen hergestelltes Ritzel 19 kämmt mit einem großen Zahnrad 20, das drehfest auf einer ersten Getriebewelle 21 ist. Der Getriebewelle 21 können weitere Getriebestufen und eine auf beliebige Art betätigte Zuspannmechanik für eine Radbremse folgen.

Das Gehäuse 9, in dem der Elektromotor 3 untergebracht ist, ist Teil eines im Übrigen nicht dargestellten Bremssattels der als Scheibenbremse ausgebildeten Bremse 1. Das Gehäuse 9 kann auch am Bremssattel angebracht sein. Im Gehäuse 9 ist nicht nur der Elektromotor 3, sondern die gesamte Betätigungseinrichtung einschließlich der nicht dargestellten Zuspannmechanik untergebracht. Der Bremssattel, von dem nur ein Bruchteil, nämlich das Gehäuse 9, dargestellt ist, ist in an sich bekannter Weise als Schwimmsattel ausgebildet, d. h. er ist quer zu einer nicht dargestellten Bremsscheibe verschieblich geführt. Dadurch wird in an sich bekannter Weise beim Drücken eines Reibbremsbelags gegen eine Seite der Bremsscheibe ein zweiter Reibbremsbelag, der auf der gegenüberliegenden Seite der Bremsscheibe im Bremssattel angeordnet ist, gegen die andere Seite der Bremsscheibe gedrückt, so dass die Bremsscheibe auf beiden Seiten gebremst wird.

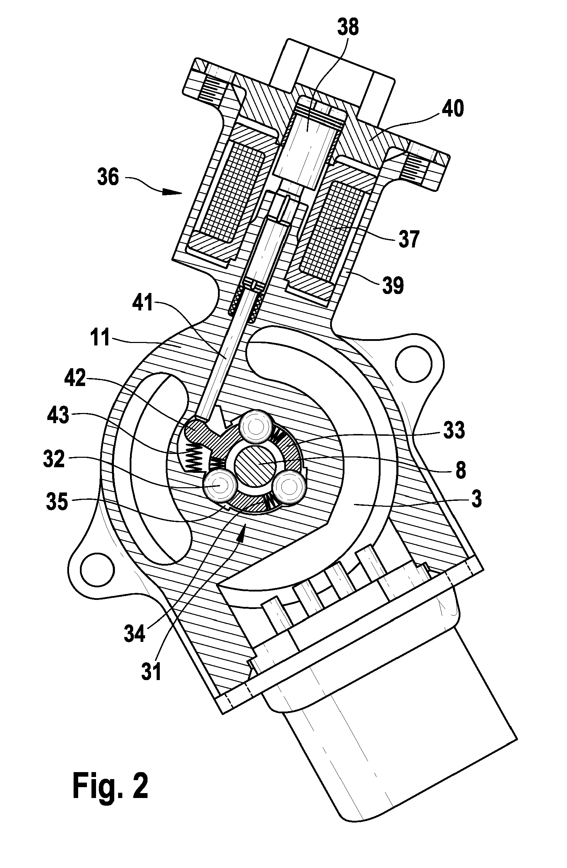

Wie in Figur 2 zu sehen, ist am bzw. im Deckel 11 ein schaltbarer Freilauf 31 untergebracht. Der Freilauf 31 ist als Klemmrollenfreilauf mit Rollen 32 als Klemm- oder Sperrelementen ausgebildet. Auch andere Bauarten des Freilaufs 31 sind möglich. Die Rollen 32 sind um die Motorwelle 8 des Elektromotors 3 herum verteilt angeordnet. Sie sind in Ausnehmungen eines Rollenkäfigs 33 aufgenommen, der in einem ringförmigen Zwischenraum zwischen der Motorwelle 8 und dem Deckel 11 angeordnet ist. Federelemente 34, die ebenfalls in den Ausnehmungen des Rollenkäfigs 33 angeordnet sind, beaufschlagen die Rollen 32 in Umfangsrichtung, so dass die Rollen 32 von der Motorwelle 8 abgehoben sind. Die Rollen 32 wälzen in Taschen 35 in der Axialbohrung des Deckels 11. Dabei bildet eine Grundfläche der Taschen 35 eine Lauffläche für die Rollen 32. Die die Laufflächen bildenden Grundflächen der Taschen 35 verlaufen spiralförmig zur Motorwelle 8. Durch Drehung des Rollenkäfigs 33 um die Motorwelle 8 wälzen die Rollen 32 des Freilaufs 31 in den Taschen 35 und bewegen sich spiralförmig auf die Motorwelle 8 zu. Liegen die Rollen 32 an den Taschen 35 und an der Motorwelle 8 an, sperren sie auf Grund des spiralförmigen Verlaufs der Taschen 35 die Drehung der Motorwelle 8 in einer Drehrichtung. Diese Drehrichtung ist eine Öffnungsrichtung der Bremse 1. Eine Drehung der Motorwelle 8 in Zuspannrichtung ist möglich. Die beschriebene, gedrehte Stellung des Rollenkäfigs 33 ist die eingeschaltete und Sperrstellung des Freilaufs 31, in der der Freilauf 31 gegen eine Drehung der Motorwelle 8 in der Löserichtung sperrt und eine Betätigung der Bremse 1 zulässt.

Ist der Rollenkäfig 33 in seine Ausgangsstellung zurück gedreht und sind die Rollen 32 durch die Federelemente 34 von der Motorwelle 8 abgehoben, ist der Freilauf 31 ausgeschaltet und die Motorwelle 8 in beiden Drehrichtungen frei drehbar.

Zum Drehen des Rollenkäfigs 33 und damit zum Einschalten des Freilaufs 31 weist der Freilauf 31 einen Elektromagneten 36 mit einer Wicklung 37 und einem Anker 38 auf. Ein Gehäuse 39 des Elektromagneten 36 ist einstückig mit dem Deckel 11 des Gehäuses 9 des Elektromotors 3. Ein Deckel 40, der das Gehäuse 39 des Elektromagneten 36 verschließt, bildet ein Joch des Elektromagneten 36, das den magnetischen Fluss schließt. Der Elektromagnet 36 schaltet den Freilauf 31 über einen Stößel 41, der tangential zum Rollenkäfig 33 des Freilaufs 31 angeordnet ist. Der Stößel 41 greift an einem radial nach außen vom Rollenkäfig 33 abstehenden Nocken 42 an, gegen dessen gegenüber liegende Seite ein Federelement 43 in Form einer Schraubendruckfeder drückt, die in einer Tasche des Deckels 11 außerhalb des Rollenkäfigs 33 untergebracht ist und die sich im Deckel 11 abstützt. Durch Bestromen der Spule 37 des Elektromagneten 36 wird der Anker 38 angezogen und drückt über den Stößel 41 gegen den Nocken 42 des Rollenkäfigs 33 des Freilaufs 31. Der Rollenkäfig 33 wird dadurch wie oben beschrieben in die eingeschaltete Stellung gedreht. Die Bremse 1 kann in der eingeschalteten Stellung des Freilaufs 31 weiter zugespannt, nicht jedoch gelöst werden. Ist oder wird die Bremse 1 bei eingeschaltetem Freilauf 31 betätigt, wird dadurch eine mechanische Spannung aufgebaut, die die Rollen 32 des Freilaufs 31 zwischen der Motorwelle 8 und dem Deckel 11 festgeklemmt hält, auch wenn der Elektromagnet 36 nicht mehr bestromt wird. Die Bremse 1 wird dadurch auch stromlos in der betätigten Stellung gehalten und kann dadurch als Feststellbremse verwendet werden. Zum Lösen wird die betätigte Bremse 1 mit dem Elektromotor 3 zugespannt, wodurch sich die mechanische Vorspannung löst, so dass das Federelement 43 den Rollenkäfig 33 des Freilaufs 31 in die ausgeschaltete Stellung zurück dreht. Die Motorwelle 8 ist jetzt frei drehbar, die Bremse 1 kann gelöst und als Betriebsbremse benützt werden. Der Deckel 11 mit den Taschen 35 für die Rollen 32, der mit den Rollen 32 zusammen wirkt und bei eingeschaltetem Freilauf 31 zusammen mit den Rollen 32 die Motorwelle 8 gegen Drehung in Löserichtung der Bremse 1 sperrt, bildet Teil einer Sperrung des Freilaufs 31.

Der Deckel 11 des Gehäuses 9 enthält alle elektrischen Leitungen sowohl des Elektromotors 3 als auch des Elektromagneten 36, die elektrischen Leitungen sind in einem oder mehreren, in der Zeichnung nicht sichtbaren elektrischen Steckern zusammen geführt. Das hat den Vorteil eines einfachen elektrischen Anschlusses der elektrischen Bauteile der erfindungsgemäßen Bremse 1.

## Patentansprüche

1. Elektromechanische Bremse, umfassend einen Elektromotor (3) mit einem Gehäuse (9), in dem eine, einen Rotor (7) tragende Motorwelle (8) drehbar gelagert ist und an dessen einem Stirnende ein Deckel (11) angebracht ist, ein Rotations-/Translations-Umsetzungsgetriebe, einen Reibbremsbelag, der zur Betätigung der Bremse (1) mit dem Elektromotor (3) über das Rotations-/Translations-Umsetzungsgetriebe gegen einen Bremskörper drückbar ist, und einen schaltbaren Freilauf (31), mit Klemm-oder Sperrelementen (32), die in einem ringförmigen Zwischenraum zwischen der Motorwelle (8) und dem Deckel (11) um die Motorwelle (8) herum derart verteilt angeordnet sind, dass der Freilauf (31) in einer eingeschalteten Stellung ein Drehen der Motorwelle (8) des Elektromotors (8) in Zuspannrichtung der Bremse (1) gestattet und gegen ein Drehen in Löserichtung der Bremse (1) sperrt, wobei der Deckel (11) ein Lagerschild für die Motorwelle (8) des Elektromotors (3) bildet und wobei der Freilauf (31) am oder im Deckel (11) untergebracht ist.

2. Elektromechanische Bremse nach Anspruch 1, **dadurch gekennzeichnet, dass** der Deckel (11) einen Lagerring (15) für ein Lager (12) der Motorwelle (8) bildet.

3. Elektromechanische Bremse nach Anspruch 1, **dadurch gekennzeichnet, dass** zumindest ein Teil (16) eines Lagerrings (16, 17) des Lagers (12) der Motorwelle (8) einstückiger Bestandteil der Motorwelle (8) ist und dass dieser Teil (16) des Lagerrings (16, 17) die Motorwelle (8) in einer Axialrichtung fixiert.

4. Elektromechanische Bremse nach Anspruch 1, **dadurch gekennzeichnet, dass** der Deckel (11) Teil einer Sperrung des Freilaufs (31) ist.

5. Elektromechanische Bremse nach Anspruch 1, **dadurch gekennzeichnet, dass** der Deckel (11) alle elektrischen Verbindungen des Elektromotors (3) und des Freilaufs (31) aufweist.

6. Elektromechanische Bremse nach Anspruch 1, **dadurch gekennzeichnet, dass** die Bremse (1) eine Scheibenbremse ist und dass das Gehäuse (9) Teil eines Bremssattels der Bremse (1) ist.

7. Elektromechanische Bremse nach Anspruch 1, **dadurch gekennzeichnet, dass** der Deckel (11) ein Gehäuse (39) für den Freilauf (31) bildet.

## Claims

1. Electromechanical brake, comprising an electric motor (3) with a housing (9) in which a motor shaft (8), which bears a rotor (7), is rotatably mounted and to one face end of which a cover (11) is attached, a rotation/translation conversion mechanism, a friction brake pad which, for the actuation of the brake (1), can be pressed against a brake body by the electric motor (3) by way of the rotation/translation conversion mechanism, and a switchable freewheel clutch (31) having clamping or blocking elements (32) which are arranged in an annular intermediate space between the motor shaft (8) and the cover (11) so as to be distributed around the motor shaft (8) such that the freewheel clutch (31), when in an activated position, permits a rotation of the motor shaft (8) of the electric motor (3) in the brake-application direction of the brake (1) and blocks a rotation in the release direction of the brake (1), wherein the cover (11) forms a bearing support for the motor shaft (8) of the electric motor (3), and wherein the freewheel clutch (31) is accommodated on or in the cover (11).

2. Electromechanical brake according to Claim 1, **characterized in that** the cover (11) forms a bearing ring (15) for a bearing (12) of the motor shaft (8).

3. Electromechanical brake according to Claim 1, **characterized in that** at least one part (16) of a bearing ring (16, 17) of the bearing (12) of the motor shaft (8) is an integral constituent part of the motor shaft (8), and **in that** said part (16) of the bearing ring (16, 17) fixes the motor shaft (8) in an axial direction.

4. Electromechanical brake according to Claim 1, **characterized in that** the cover (11) is part of a blocking means of the freewheel clutch (31).

5. Electromechanical brake according to Claim 1, **characterized in that** the cover (11) has all of the electrical connections of the electric motor (3) and of the freewheel clutch (31).

6. Electromechanical brake according to Claim 1, **characterized in that** the brake (1) is a disk brake, and **in that** the housing (9) is part of a brake caliper of the brake (1).

7. Electromechanical brake according to Claim 1, **characterized in that** the cover (11) forms a housing (39) for the freewheel clutch (31).

## Revendications

1. Frein électromécanique, comprenant un moteur électrique (3) doté d'un carter (9) dans lequel un arbre de moteur (8) supportant un rotor (7) est disposé de façon à pouvoir tourner et au niveau de l'extrémité frontale duquel un cache (11) est placé, une transmission de conversion de rotation/translation, une garniture de frein à friction pouvant être comprimée pour actionner le frein (1) contre un corps de frein avec le moteur électrique (3), via la transmission de conversion de rotation/translation, et une roue libre (31) pouvant être connectée, avec des éléments de serrage ou de blocage (32) disposés de façon à être répartis dans un espace intermédiaire de forme annulaire situé entre l'arbre de moteur (8) et le cache (11) et entourant l'arbre de moteur (8) de telle sorte que la roue libre (31) permet, dans une position connectée, la rotation de l'arbre de moteur (8) du moteur électrique (3) dans la direction de serrage du frein (1) et bloque le frein (1) contre une rotation dans la direction de relâchement, le cache (11) formant un panneau de palier de roulement pour l'arbre de moteur (8) du moteur électrique (3) et la roue libre (31) étant logée au niveau du cache (11) ou dans celui-ci.

2. Frein électromécanique selon la revendication 1, **caractérisé en ce que** le cache (11) forme une bague de palier de roulement (15) pour un palier de roulement (12) de l'arbre de moteur (8).

3. Frein électromécanique selon la revendication 1, **caractérisé en ce qu'**au moins une partie (16) d'une bague de palier de roulement (16, 17) du palier de roulement (12) de l'arbre de moteur (8) est un composant réalisé d'un seul tenant de l'arbre de moteur (8) et que cette partie (16) de la bague de palier de roulement (16, 17) fixe l'arbre de moteur (8) dans une direction axiale.

4. Frein électromécanique selon la revendication 1, **caractérisé en ce que** le cache (11) fait partie d'un blocage de la roue libre (31).

5. Frein électromécanique selon la revendication 1, **caractérisé en ce que** le cache (11) comporte toutes les liaisons électriques du moteur électrique (3) et de la roue libre (31).

6. Frein électromécanique selon la revendication 1, **caractérisé en ce que** le frein (1) est un frein à disque et que le carter (9) fait partie d'un étrier du frein (1).

7. Frein électromécanique selon la revendication 1, **caractérisé en ce que** le cache (11) forme un carter (39) pour la roue libre (31).
